(19) Europäisches Patentamt
European Patent Office
Office européen des brevets

(11) Veröffentlichungsnummer: **0 266 337 B1**

(12) # EUROPÄISCHE PATENTSCHRIFT

(45) Veröffentlichungstag der Patentschrift: **17.01.90**

(51) Int. Cl.⁴: **C22B 7/00**, C22B 11/06

(21) Anmeldenummer: **87890230.3**

(22) Anmeldetag: **21.10.87**

(54) **Hydrometallurgisches Verfahren zur Gewinnung von Silber aus dem Anodenschlamm der Kupferelektrolyse und ähnlicher Rohstoffe.**

(30) Priorität: **31.10.86 AT 2906/86**

(43) Veröffentlichungstag der Anmeldung: **04.05.88 Patentblatt 88/18**

(45) Bekanntmachung des Hinweises auf die Patenterteilung: **17.01.90 Patentblatt 90/3**

(84) Benannte Vertragsstaaten: **BE DE FR GB IT NL SE**

(56) Entgegenhaltungen:
**EP-A- 0 176 100**
**DD-A- 146 712**
**DD-A- 201 920**
**DE-C- 2 117 513**
**DE-C- 2 543 027**

(73) Patentinhaber: **Austria Metall Aktiengesellschaft, A-5282 Braunau am Inn(AT)**

(72) Erfinder: **Bertha, Josef, Ing., Faberstrasse 29d, A-6230 Brixlegg(AT)**

(74) Vertreter: **Hain, Leonhard, Dipl.-Ing., Tal 18/IV, D-8000 München 2(DE)**

EP 0 266 337 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein hydrometallurgisches Verfahren zur Aufarbeitung von Anodenschlamm aus der Kupferelektrolyse und ähnlicher Rohstoffe, die außer Silber eines oder mehrere der Elemente Pb, Au, Platinmetalle, Se, Te, Sb, Sn, As, Bi, Cu, Ni, Zn, Fe sowie Sulfate, Chloride, Kieselsäure u.a. enthalten können, bei dem Natriumhypochlorit in Anwesenheit von Salzsäure zum Einsatz gelangt.

Der bei der elektrolytischen Kupferraffination anfallende Anodenschlamm enthält je nach der Herkunft der Anoden wechselnde Mengen an Silber, Gold, Platin, Palladium, Selen, Tellur, Arsen, Antimon, Kupfer, Nickel, Blei u.a. Der Hauptzweck der Anodenschlamm-Aufbereitung ist die Abtrennung und Gewinnung der wertvollen Metalle. Gegenwärtig werden verschiedene Verfahren zur Aufbereitung angewendet.

Bei den herkömmlichen Verfahren werden die Schlämme in einem Flammofen pyrometallurgisch aufgeschlossen (Treibherd-Verfahren) und das erhaltene Anodensilber elektrochemisch weiterbehandelt. Diese Verfahren besitzen eine Reihe von wesentlichen Nachteilen. Besonders das arbeits-, zeit- und energieaufwendige Flammofenschmelzen mit den vielen Schlackenchargen, die viel Edelmetall aufnehmen und zur Aufarbeitung innerer Kreisläufe bedürfen. Erst neuere Verfahren kombinieren naßchemische und pyrometallurgische Verfahrensschritte.

So wird z.B. nach einem neueren Verfahren (US-Patent 4,002,544 bzw. DE-AS 25 43 027) der entkupferte Anodenschlamm bei ca. 160 - 300° C sulfatisierend geröstet, um die Kupfer- und Silberselenide und -telluride zu zersetzen. Es werden dabei in der heißen Schwefelsäure nur Ag, Se und Te gelöst, und zwar ca. 95 % des eingesetzten Ag, Se und Te.

Aus dem filtrierten Salzschlamm wird durch eine Laugung mit heißem Wasser Ni herausgelöst und aus dem Restschlamm das Au, Pt und Pd nach bekannten Verfahren gewonnen. Aus dem schwefelsauren Filtrat scheidet man nach Verdünnung durch Elektrolyse das Ag, Se und Te kathodisch ab, schmilzt das erhaltene Metallpulver unter Luftzufuhr ein ($SeO_2$ und $TeO_2$ verflüchtigen) und führt das Metall als Anodensilber der Silberelektrolyse zu. Dieses Verfahren umgeht wohl die Schmelzarbeit im Flammofen, erfordert aber eine zusätzliche Gewinnungselektrolyse für die Abscheidung von Ag, Se und Te. Außerdem ist mit der sulfatisierenden Röstung keine exakte Trennung der Komponenten möglich.

In einem anderen Verfahren (DE-AS 146 712) wird der von Se und Te befreite Anodenschlamm zur Abtrennung von Ag, Cu und Pb als Nitrate in Lösung gehen und über eine Silberelektrolyse weiterverarbeitet werden, während im Schlammrückstand das gesamte Au, Pt und Pd nach einem der bekannten pyro- und hydrometallurgischen Verfahren gewonnen werden kann. Das in der salpetersauren Lösung enthaltene Silber wird als Hauptmenge durch eine Gewinnungselektrolyse abgeschieden und der Restsilbergehalt durch Zementation mit Cu gewonnen. Aus der entsilberten Lösung wird das Pb mit $H_2SO_4$ als $PbSO_4$ ausgefällt, abfiltriert, das Filtrat zur Trennung von Salpetersäure und Schwefelsäure destilliert und rektifiziert und der im Destillationssumpf verbleibende Kristallbrei mit $H_2O$ aufgenommen und zu Cu oder Kupfersalz verarbeitet.

Bei Anwesenheit von Pd im Anodenschlamm ist dieses Verfahren nicht anwendbar, weil Pd in Salpetersäure zum größten Teil löslich ist und ein eigener Arbeitsgang zur Entfernung dieses Wertmetalles erst entwickelt werden muß. Ein weiterer Nachteil ist, daß infolge des hohen Pd- und Cu-Gehaltes ständig eine überaus kostspielige Elektrolytaufbereitung durchgeführt werden muß.

Als weiteres Verfahren wurde die direkte Chlorierung des Anodenschlammes vorgeschlagen, ohne vorherige Pb-Abtrennung (DE-OS 21 17 513). Der Anodenschlamm wird mit verdünnter Salzsäure zu einem dünnflüssigen Brei angerührt, in den unter Rühren gasförmiges Chlor bei einer Temperatur um ca. 100° C eingeleitet wird, um alle im Schlamm enthaltenen Metalle mit Ausnahme von Silber, zu lösen. Es muß heiß filtriert und auch heiß nachgewaschen werden, um die Hauptmenge des Pb als $PbCl_2$ zu entfernen.

Anschließend erfolgt die Extraktion des AgCl mit Ammoniak, wobei Ag von den restlichen Begleitelementen Sb, Sn und $SiO_2$ u.a. getrennt wird. Die Gewinnung des Silbers aus der ammoniakalischen Lösung erfolgt durch das Verdampfen des Ammoniaks, Digerieren des AgCl-Niederschlages in einer NaOH-Lösung und Reduktion des entstandenen $Ag_2O$ durch reduzierende Zucker zu reinem, pulverförmigen Silbermetall, das in eine handelsübliche Form umgeschmolzen werden muß.

Nachteilig sind bei diesem Verfahren die Anwendung von $Cl_2$-Gas in stark salzsaurer Lösung (bis 12n = 432 g HCl/l) bei ca. 100° C, das schwierig zu beherrschende Sicherheits- und Korrosionsprobleme bringt, den Einsatz von Rückflußkühlern für HCl-Gas/Dampf notwendig macht, und außerdem ist die Abtrennung von $PbCl_2$ aus Schlämmen großtechnisch wegen der Temperaturabfälle in den Filterpressen und Ableitungen (Verstopfungen) kaum beherrschbar.

Es ist auch hier mit einer exakten Trennung von Pb und Ag nicht zu rechnen.

In der Patentschrift DD-PS 201 920 wird die Auflösung von Gold und Silber aus Silbererzen mit geringen Edelmetallgehalten mit wäßrigen NaCl-Lösungen (200-250 g/l) vorgeschlagen, wobei das Erz entweder vor der Laugung oder während der Laugung "belüftet" wird, zum Teil auch unter Zusatz von Gold durch Zugabe von Hypochlorit-Ionen, und zwar bei einem pH-Wert von über 4. Die Oxidation erfolgt durch das $OCl^-$-Ion, das bei diesem pH-Bereich in NaCl und Sauerstoff zerfällt:

$$NaOCl \dashrightarrow NaCl + O$$

Auch bei der Patentschrift US-PS 4,439,235 wird eine Laugung von Erzen beschrieben unter Verwendung von NaOCl, wobei die Laugung durchgeführt wird durch Versetzen der Erze mit Lösungen, die neben 500 g NaOCl/l ca. 20 ml HCl/l aufweisen. Der Zusatz der Salzsäure dient hier lediglich der Einstellung des pH-Wertes der Lösung auf ca. 4 - 5.

Die Oxidationswirkung ist ebenfalls wie oben durch den Zerfall von NaOCl in NaCl und O gegeben.

Zum Unterschied zu diesen letztgenannten Patentschriften wird bei der vorliegenden Patentanmeldung das verwendete NaOCl zur Erzeugung von Chlorgas (in statu nascendi) direkt in der Schlammsuspension verwendet.

Bei der Patentanmeldung EP-A1 0 176 100 (Austria Metall AG) wird ebenfalls NaOCl zur Erzeugung von Chlorgas verwendet, in dem die NaOCl-Lösung in die vom säurelöslichen Kupfer und Nickel sowie vom Blei befreite salzsaure Schlammsuspension eingeleitet wird. Das erfindungsgemäße Verfahren verzichtet auf die Entfernung von säurelöslichem Kupfer und Nickel und des Bleis, wobei sich eine bedeutende Verfahrensvereinfachung ergibt.

Demgegenüber ist das Ziel der Erfindung ein hydrometallurgisches Verfahren zur Aufarbeitung von Anodenschlamm aus der Kupferelektrolyse und ähnlicher Rohstoffe, die außer Silber eines oder mehrere der Elemente Pb, Au, Platinmetalle, Se, Te, Sb, Sn, As, Bi, Cu, Ni, Zn, Fe sowie Sulfat, Chlorid, Kieselsäure u.a. enthalten können, derart, daß eine möglichst vollständige Abtrennung des Silbers von den Begleitstoffen auf kürzerem Wege und mit hohem Ausbringen (ca. 99 %) erfolgt.

Die Aufgabe wird gemäß Anspruch 1 gelöst. Zur Erläuterung siehe auch das Verfahrensschema!):

Der Anodenschlamm wird zur Zerstörung der sehr stabilen Selenide, Telluride und anderer schwer löslicher Verbindungen einer Chlorierung in salzsaurer Lösung unterworfen. Es hat sich überraschenderweise bei Großversuchen gezeigt, daß eine Entbleiung und Entkupferung des Anodenschlammes vor der Chlorierung (Entfernung des säurelöslichen Nickels mit eingeschlossen) bei diesem Verfahren nicht notwendig ist.

Zum Unterschied von anderen Verfahren, die auch eine Chlorierung durchführen, wird bei dieser Neuentwicklung ohne vorangehende Entfernung von Kupfer, Nickel und Blei die Chlorierung mit Natriumhypochlorit derart durchgeführt, daß in die kalte, salzsaure Schlammsuspension eine konzentrierte NaOCl-Lösung eingeleitet wird. Dabei entsteht direkt an der Eintrittsstelle des NaOCl Chlor, das in statu nascendi äußerst reaktiv ist und in relativ kurzer Zeit die vorhandenen stabilen Verbindungen von Selen und Tellur aufspaltet, die Metalle Au, Pt, Pd, Se und Te u.a. in Lösung bringt und das Ag quantitativ in AgCl umwandelt.

Reaktionsgleichungen:

$NaOCl + 2\ HCl \longrightarrow NaCl + Cl_2 + H_2O$

$Ag_2Se + 4\ H_2O + 4\ Cl_2 \longrightarrow 2\ AgCl + H_2SeO_4 + 6\ HCl$

$(4\ H_2O + 4\ Cl_2 \longrightarrow 8\ HCl + 4\ O)$

Der Vorteil gegenüber der "Direktchlorierung" mit $Cl_2$-Gas ist neben der Bildung von in statu nascendi sehr reaktivem Chlor die unproblematische Manipulation mit NaOCl gegenüber dem $Cl_2$-Gas. Das NaOCl ist nicht nur besser dosierbar, sondern hat auch große Vorteile in bezug auf die Arbeitssicherheit und den Umweltschutz und ist auch günstiger in den Investitions- und Betriebskosten.

Eine weitere Verbesserung gegenüber anderen Chlorierungsverfahren ist der Umstand, daß bei diesem Verfahren die Chlorierung bei Zimmertemperatur durchgeführt werden kann. Nach der Filtration der chlorierten Suspension erhält man ein Au-, Pd-, Pt-, Se- und Te-hältiges Filtrat, das in einer anderen Verfahrensstufe in bekannter Weise weiterbehandelt wird.

Der AgCl-hältige Filtrationsrückstand wird unter Zuhilfenahme eines Extraktons- und Filterhilfsmittels mit einer Ammoniak-Lösung bei Zimmertemperatur und unter guter Rührung gelaugt, das AgCl als $Ag(NH_3)_2Cl$ extrahiert, während man den nach dem Filtrieren und Waschen zurückbleibenden Filterkuchen wieder in den Schachtofen zurückführt.

Reaktionsgleichung:

$AgCl + 2\ NH_3 \longrightarrow Ag(NH_3)_2Cl$

Das Filtrat enthält, bedingt durch den hohen Pb-Gehalt des Anodenschlammes, immer geringe Mengen an gelöstem Blei (ca. 400 - 800 ppm). Bei der $Ag^0$-Fällung wird ein kleiner Anteil des Bleis mit dem Silber mitgefällt und verunreinigt dadurch das $Ag^0$.

In einer zusätzlichen Verfahrensstufe wird das Blei aus der Lösung mit geeigneten Fällmitteln (z.B. $PO_4^{---}$ oder $CrO_4^{--}$) gefällt und durch Abfiltrieren aus der Lösung ausgeschieden.

Das Ag-hältige bleifreie Filtrat versetzt man in einem gasdichten Reaktor unter Rühren mit einer $Cu^{I}$-Lösung oder mit festen $Cu^{I}$-Verbindungen (z.B. CuCl) oder mit Kupferpulver oder Bronzestaub (z.B. 80 Cu, 20 Zn) und reduziert das $Ag^+$ in ammoniakalischer Lösung zu Ag-Metall. Bei Anwendung von Kupferpulver oder Bronzestaub erhöht man den $Cu^{++}$-Gehalt der $Ag^+$-Lösung vor der Fällung durch Zugabe einer $CuCl_2$-Lösung derart, daß der $Cu^{++}$-Gehalt der Lösung ca. 5 - 10 g/l beträgt. Eine Verunreinigung des ausgefällten Silberpulvers mit dem Fällmittel ist somit ausgeschlossen.

Durch Zusatz von kleinen Mengen eines Flockungsmittels vor der Fällung des $Ag^0$, z.B. 1 - 5 mg Superfloc® (Cyamid)/l wird das Volumen des Silberpulvers stark erhöht (z.B. auf das 5- bis 10-fache).

Dieser nach dem Filtrieren des Fällungsgemisches so erhaltene Silberpulver-Kuchen läßt sich leichter auswaschen und nachreinigen, so daß ein Silberpulver erhalten wird, das nach dem Schmelzen einen Ag-Wert von über 99,99 % Ag erreicht.

Aus dem Filtrat der Ag-Fällung wird durch Zusatz einer genügend großen Menge an Kalziumhydroxid und anschließender Destillation die Hauptmenge des eingesetzten $NH_3$ wiedergewonnen. Als Destillationsrückstand wird ein mit etwas Kalk verunreinigtes Kupferoxichlorid erhalten, das in den Hüttenbetrieb zurückgeführt wird. Das Filtrat kann in den Vorfluter eingeleitet werden.

Reaktionsgleichungen :

$Cu(NH_3)_4^{++} + Cu^0 \longrightarrow 2\ Cu(NH_3)_2^+$
$Cu^+ + 2\ NH_3 \longrightarrow Cu(NH_3)_2^+$
$Ag(NH_3)_2^+ + Cu(NH_3)_2^+ \longrightarrow Cu(NH_3)_4^{++} + \underline{Ag^0}$
$4\ Cu(NH_3)_4Cl_2 + 3\ Ca(OH)_2 \longrightarrow 3\ CaCl_2 + 3\ Cu(OH)_2 \ .\ CuCl_2 + 16\ NH_3$

Als $Cu^{I}$-Verbindungen können CuCl, $M^{I}CuCl_2$ ($M^{I}$ = H,Na,K) oder $M^{II}(CuCl_2)_2$ ($M^{II}$ = Ca,Mg) verwendet werden.

Beispiel:

69,5 kg vom Anodenschlamm (ca. 4 % Ag) wurden in einem gasdichten Reaktor (Stufe 1, Verfahrensschema) mit verdünnter Salzsäure zu einem Volumen von 50 l suspendiert. In diese Suspension wurde bei Zimmertemperatur und unter Rühren langsam eine konzentrierte NaOCl-Lösung eingeleitet. In ca. 1 1/2 Stunden war die Suspension vollständig chloriert, die Temperatur stieg von 22° C auf 35° C an.

Das Reaktionsgemisch wurde über eine gasdichte Filterpresse abfiltriert, gut gewaschen und die Lösung, das gesamte Au, Pd, Pt, Se und den größten Teil des Te-Gehaltes des Anodenschlammes, einer getrennten Aufarbeitung zugeführt. Ein kleiner Teil des Te bleibt im ungelösten Schlamm zurück.

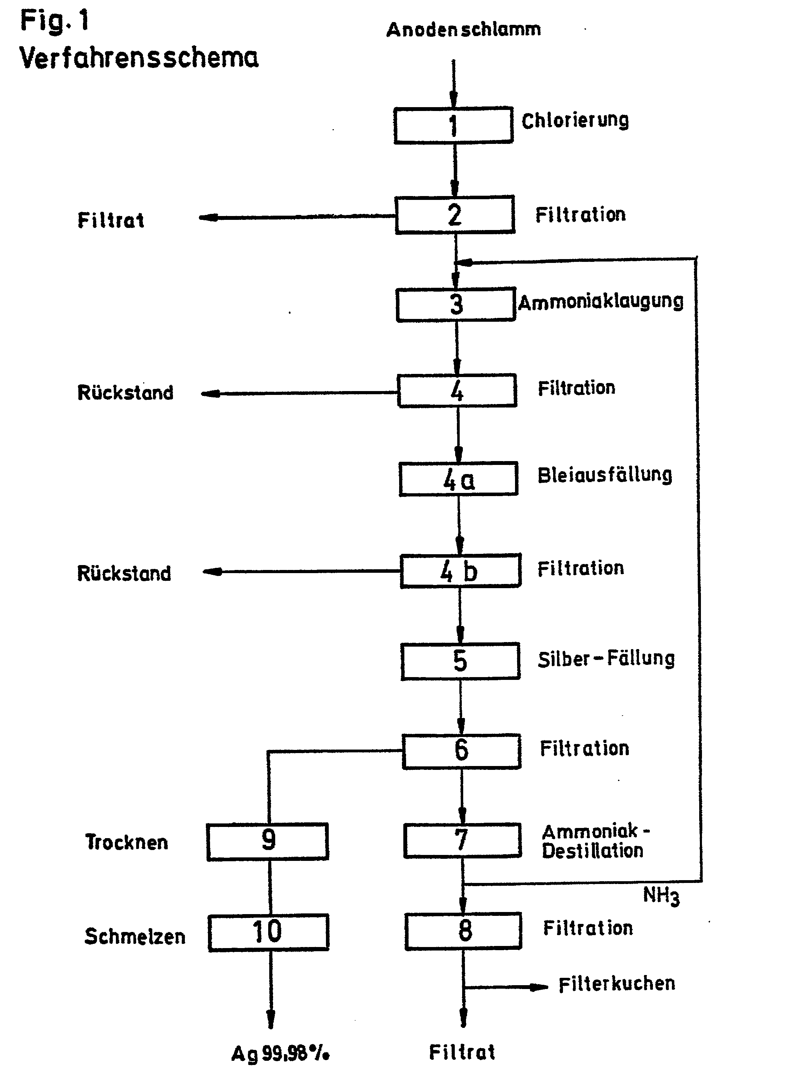

Der Filterkuchen, das gesamte Silber als AgCl enthaltend, wurde in Stufe 3 (Fig. 1) mit 10 kg Kalziumkarbonat (Kreide) als Extraktions- und Filterhilfsmittel versetzt und dann mit 10 %-igem Ammoniak auf 60 l aufgeschlämmt. Die Suspension wurde ca. 3 Stunden gerührt, um das gesamte AgCl als $Ag(NH_3)_2Cl$ zu lösen. Die Suspension wurde dann über eine gasdichte Filterpresse filtriert und gut gewaschen. Der Filterkuchen wurde wieder in den Schachtofen eingesetzt. Das Filtrat (ca. 75 l) wurde unter Rühren mit 100 ml $H_3PO_4$ (l,)) versetzt und nach kurzem Rühren filtriert. (Fig. 1, 4a, 4b)

Durch den Zusatz von $H_3PO_4$ zu der $Ag^+$-Lösung wurde das $Pb^{++}$ nahezu quantitativ als Bleiphosphat ausgefüllt. Diese Nachreinigung der $Ag^+$-Lösung ist notwendig, um eine Ag-Reinheit von 99,99 % Ag zu erhalten.

Reaktionsgleichung:

$3\ Pb^{++} + 2\ PO_4^{---} \longrightarrow Pb_3(PO_4)_2$

Das $Ag^+$-hältige bleifreie Filtrat wurde in der Stufe 5 (Fig. 1) mit 200 mg Superfloc® (in wäßriger Lösung) und mit einem kleinen Überschuß einer neutralen $NaCuCl_2$-Lösung versetzt und dabei das $Ag^+$ quantitativ zu Ag-Metall gefällt. Nach dem Filtrieren, Waschen, Nachreinigen und Trocknen wurde das Silberpulver in einem Graphittiegel zu Reinstsilber verschmolzen. Ag-Gehalt: 99,99 %.

Das Filtrat wurde zunächst mit ca. 5 kg Kalziumhydroxid versetzt, das freie $NH_3$ in Stufe 7 (Fig. 1) vollständig abdestilliert, der dabei anfallende Destillationsrückstand abfiltriert und in den Betrieb zurückgeführt, während das Filtrat in den Vorfluter geleitet wurde.

**Patentansprüche**

1. Hydrometallurgisches Verfahren zur Aufarbeitung von Anodenschlamm aus der Kupferelektrolyse und ähnlicher Rohstoffe, die außer Silber eines oder mehrere der Elemente Pb, Au, Platinmetalle, Se, Te, Sb, Sn, As, Bi, Cu, Ni, Zn, Fe sowie Sulfate, Chloride, Kieselsäure u.a. enthalten können, bei dem Natriumhypochlorit in Anwesenheit von Salzsäure zum Einsatz gelangt, dadurch gekennzeichnet, daß das Ausgangsprodukt mit Salzsäure aufgeschlämmt, durch Zuleiten einer Natriumhypochlorit-Lösung und das dabei entstehende in statu nascendi wirkende Chlor chloriert wird, das Filtrat mit den gelösten Begleitelementen abfiltriert wird, während das in AgCl umgewandelte Ag im Restschlamm verbleibt, aus dem dann durch Extraktion mit Ammoniak das Silberchlorid extrahiert, die erhaltene $Ag(NH_3)_2Cl$-Lösung durch geeignete Fällmittel vom gelösten Blei gereinigt, zur Vergrößerung des Kuchenvolumens des zu fällenden Silberpulvers mit einer entsprechenden Menge an Flokkungsmittel versetzt und mit $Cu^{I}$-Verbindungen oder Kupferpulver oder Bronzestaub (z.B. 80 Cu, 20 Zn) bei Zimmertemperatur oder in der Wärme und unter Rühren versetzt wird, wobei das $Ag^+$ quantitativ als Ag-Metall gefällt und nach dem Abfiltrieren, Waschen und Trocknen zu Ag-Metall verschmolzen wird, während das Filtrat mit Kalziumhydroxid versetzt wird, der dabei freigesetzte Ammoniak durch Destillation wiedergewonnen und der nach dem Filtrieren des Destillationsrückstandes erhaltene Filterkuchen in den Hüttenprozeß zurückgeführt wird.

2. Verfahren nach Anspruch 1, dadurch gekennzeichnet, daß der AgCl-hältige Filterrückstand mit Kalziumkarbonat (Kreide) im Verhältnis 5:1 vermischt und bei Zimmertemperatur unter Rühren mit 1O %-igem Ammoniak 3 - 6 Stunden gelaugt wird, um das gesamte AgCl in das lösliche $Ag(NH_3)_2Cl$ überzuführen.

3. Verfahren nach Anspruch 1 oder 2, dadurch gekennzeichnet, daß das $Ag^+$ aus der ammoniakalischen $Ag(NH_3)_2Cl$-Lösung durch Zugabe einer neutralen, sauren oder ammoniakalischen $Cu^{I}$-Lösung oder Kupferpulver oder Bronzestaub (z.B. 8O Cu, 2O Zn) bei Zimmertemperatur oder in der Wärme zu metallischem Silber reduziert und nach dem Abfiltrieren, Waschen und Trocknen zu metallischem Silber verschmolzen wird.

4. Verfahren nach Anspruch 1 oder 3, dadurch gekennzeichnet, daß als $Cu^{I}$-Verbindungen Lösungen von CuCl oder $M^{I}CuCl_2$ ($M^{I}$ = Na,H,K) oder $M^{II}(CuCl_2)_2$ ($M^{II}$ = Ca, Mg) oder deren feste Formen verwendet werden.

5. Verfahren nach Anspruch 1, 2 oder 3, dadurch gekennzeichnet, daß der ammoniakalaischen $Ag^+$-Lösung vor der $Ag^0$-Fällung eine kleine Menge an Flockungsmittel zugesetzt wird, um das Volumen des Silberpulver-Kuchens zu vergrößern.

**Claims**

1. Hydrometallurgical process for the reprocessing of anode sludge from copper electrolysis and similar raw materials which may, apart from silver, contain one or more of the elements Pb, Au, platinum metals, Se, Te, Sb, Sn, As, Bi Cu, Ni, Zn, Fe, as well as sulphates, chlorides, silicic acid, etc., in which sodium hypochlorite is used in the pressence of hydrochloric acid, characterized in that the starting product is suspended with hydrochloric acid, chlorinated by feeding in a sodium hypochlorite solution and the resulting chlorine acting in statu nascendi, the filtrate is filtered off with the dissolved accompanying elements, whilst the Ag converted into AgCl remains in the residual sludge from which the silver chloride is then extracted by extracting with ammonia, the resulting $Ag(NH_3)_2Cl$ solution is purified from dissolved lead by suitable precipitants, for increasing the cake volume of the silver powder to be precipitated mixed with a corresponding flocculating agent quality and mixed with $Cu^I$ compounds or copper powder or bronze dust (e.g. 80 Cu, 20 Zn), at room temperature or in heat and accompanied by stirring, the $Ag^+$ being quantitatively precipitated as Ag metal and after filtering, washing and drying is melted to Ag metal, whilst the filtrate is mixed with calcium hydroxide, the ammonia released is recovered by distillation and the filter cake obtained following the filtration of the distillation residue is returned to the metallurgical plant process.

2. Process according to claim 1, characterized in that the AgCl-containing filter residue is mixed with calcium carbonate (chalk) in a ratio of 5:1 and is leaches at room temperature, accompanied by stirring with 10% ammonia, for 3 to 6 hours, in order to convert all the AgCl into soluble $g(NH_3)_2Cl$.

3. Process according to claims 1 or 2, characterized in that the $Ag^+$ from the ammoniacal $Ag(NH_3)_2Cl$-solution is reduced to metallic silver by adding a neutral, acid or ammoniacal $Cu^I$ solution or copper powder or bronze dust (e.g. 80 Cu, 20 Zn) at room temperature or in the heat and following filtering, washing and drying is melted to metallic silver.

4. Process according to claims 1 or 3, characterized in that as $Cu^I$ compounds use is made of solutions of CuCl or $M^ICuCl_2$ ($M^I$ = Na,H,K) or $M^{II}(CuCl_2)_2$ $M^{II}$ = Ca, Mg) or their solid forms.

5. Process according to claims 1, 2 or 3, characterized in that a small amount of a flocculating agent is added to the ammoniacal $Ag^+$ solution prior to $Ag^O$ precipitation, in order to increase the silver powder cake volume.

**Revendications**

1. Procédé hydrométallurgique pour traiter une boue anodique provenant d'une électrolyse du cuivre et des matières premières semblables pouvant contenir, en plus de l'argent, un ou plusieurs des éléments Pb, Au, des métaux de la famille du platine, Se, Te, Sb, Sn, As, Bi, Cu, Ni, Zn, Fe, ainsi que des sulfates, des chlorures, de la silice etc., procédé dans lequel on utilise de l'hypochlorite de sodium en présence d'acide chlorhydrique, procédé caractérisé en ce qu'on met le produit de départ en suspension dans de l'acide chlorhydrique, on chlore par introduction d'une solution d'hypochlorite de sodium et à l'aide du chlore qui en résulte et qui agit à l'état naissant, on sépare par filtration le filtrat contenant les éléments d'accompagnement dissous cependant que le Ag transformé en AgCl demeure dans la boue restante, dont on extrait ensuite, par extraction à l'ammoniac, le chlorure d'argent, on purifie, à l'aide d'un agent convenable de précipitation, la solution de $Ag(NH_3)_2Cl$ obtenue pour en séparer le plomb dissous, on ajoute, pour augmenter le volume du gâteau de poudre d'argent à précipiter, une quantité correspondante d'un agent de floculation et l'on ajoute des composés de $Cu^I$ ou de la poudre de cuivre ou de la poussière de bronze (par exemple 80 Cu, 20 Zn) à la température ambiante ou à chaud et en agitant, l'$Ag^+$ étant quantitativement précipité et, après filtration, lavage et séchage, étant fondu pour être obtenu sous forme de Ag métal, cependant que l'on ajoute de l'hydroxyde de calcium au filtrat, que l'on récupère par distillation l'ammoniac mis en liberté et que l'on recycle dans le procédé métallurgique le gâteau de filtration obtenu après la filtration du résidu de la distillation.

2. Procédé selon la revendication 1, caractérisé en ce qu'on mélange le résidu de filtration, contenant AgCl, avec du carbonate de calcium (craie) ajoutée selon un rapport de 5:1 et l'on soumet durant 3 à 6 h à une lixiviation à la température ambiante sous agitation, à l'aide d'ammoniaque à 10 % afin de transformer la totalité de AgCl en l'$Ag(NH_3)_2Cl$ soluble.

3. Procédé selon la revendication 1 ou 2, caractérisé en ce qu'on réduit à l'état d'argent métallique le $Ag^+$ provenant de la solution ammoniacale de $Ag(NH_3)_2Cl$, par addition d'une solution neutre, acide ou ammoniacale de $Cu^I$ ou d'une poudre de cuivre ou d'une poussière de bronze (par exemple 80 Cu, 20 Zn) à la température ambiante ou à chaud et, après séparation par filtration, lavage et séchage, on fait fondre pour obtenir de l'argent métallique.

4. Procédé selon la revendication 1 ou 3, caractérisé en ce qu'on utilise comme composé de $Cu^I$ des solutions de CuCl ou de $M^ICuCl2$ ($M^I$ = Na, H, K) ou de $M^{II}$ $(CuCl_2)_2$ ($M^{II}$ = Ca, Mg) ou leurs formes solides.

5. Procédé selon la renvendication 1, 2 ou 3, caractérisé en ce qu'on ajoute ammoniacale de $Ag^+$ , avant la précipitation de $Ag^O$, une faible quantité d'un agent de floculation afin d'augmenter le volume du gâteau de poudre d'argent.

Fig. 1
Verfahrensschema